(19) Europäisches Patentamt
European Patent Office
Office européen des brevets

(11) Veröffentlichungsnummer: **0 096 658**
**B1**

(12) **EUROPÄISCHE PATENTSCHRIFT**

(45) Veröffentlichungstag der Patentschrift: **08.01.86**

(21) Anmeldenummer: **83810230.9**

(22) Anmeldetag: **02.06.83**

(51) Int. Cl.⁴: **A 01 N 43/64**, A 01 N 47/04, A 01 N 47/14 // (A01N43/64, 37:34, 37:32), (A01N47/04, 43:64), (A01N47/14, 43:64)

(54) **Mittel zur Bekämpfung von Pflanzenkrankheiten, dessen Herstellung und dessen Verwendung im Pflanzenschutz.**

(30) Priorität: **08.06.82 CH 3528/82**

(43) Veröffentlichungstag der Anmeldung: **21.12.83 Patentblatt 83/51**

(45) Bekanntmachung des Hinweises auf die Patenterteilung: **08.01.86 Patentblatt 86/2**

(84) Benannte Vertragsstaaten: **AT BE CH DE FR IT LI LU NL SE**

(56) Entgegenhaltungen: **GB - A - 1 589 852**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Ruess, Wilhelm, Burgweg 4, CH-4148 Pfeffingen (CH)**
Erfinder: **Urech, Pierre, Dr., Dorfstrasse 1, CH-5430 Wettingen (CH)**
Erfinder: **Eberle, Jürg, Vorderbergstrasse 95, CH-4104 Oberwil (CH)**
Erfinder: **Staub, Theodor, Dr., Bosenhaldenweg 28, CH-4125 Riehen (CH)**

**EP 0 096 658 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue pflanzenschützende Mittel, die als aktive Komponente eine der weiter unten beschriebenen Wirkstoffkombinationen enthalten. Sie betrifft ferner die Herstellung dieser Mittel sowie deren Verwendung im Pflanzenschutz bzw. ein Verfahren zur Verhütung oder Bekämpfung eines Befalls von Kulturpflanzen durch phytopatogene Pilze oder durch andere vergesellschaftete, insbesondere physiologische Pflanzenkrankheiten, das auf dem Einsatz der genannten, neuen Mittel beruht.

Die den erfindungsgemässen Mitteln zugrundeliegenden Wirkstoffkombinationen zeigen eine grosse Wirkungsbreite und insbesondere einen synergistischen Effekt, der die additive Fungizid-Wirkung der Einzelkomponenten in sehr vorteilhafter Weise deutlich übertrifft.

Die erfindungsgemässen Wirkstoffkombinationen bestehen aus der Verbindung der Formel I

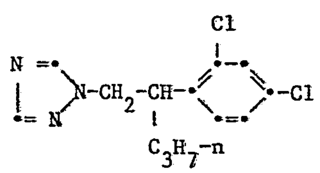 (I)

in Kombination mit einer der nachfolgenden Verbindungen der Formeln

CAPTAN 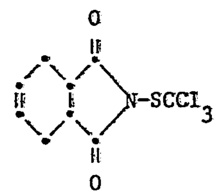 (A),

MANCOZEB 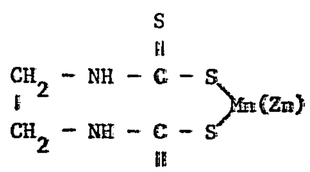 (B),

Mn:Zn = 8:1

CHLORTHALONIL 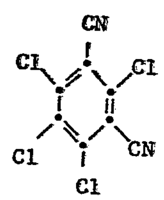 (C),

FOLPET 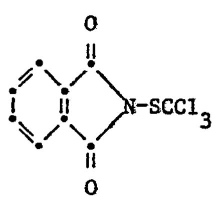 (D)

oder

CAPTAFOL 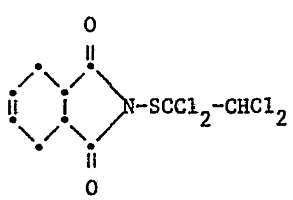 (E).

Die erfindungsgemässen Wirkstoffkombinationen umfassen somit Zweikomponentensysteme.

Im Rahmen vorliegender Erfindung werden insbesondere solche Mittel bevorzugt, die die folgenden Wirkstoffkombinationen enthalten:

a) Wirkstoff der Formel I in Kombination mit dem Wirkstoff der Formel A.

b) Wirkstoff der Formel I in Kombination mit dem Wirkstoff der Formel B.

c) Wirkstoff der Formel I in Kombination mit dem Wirkstoff der Formel C.

d) Wirkstoff der Formel I in Kombination mit dem Wirkstoff der Formel D.

e) Wirkstoff der Formel I in Kombination mit dem Wirkstoff der Formel E.

Unter den Mischungen a bis e sind die Mischungen a und b, insbesondere a auf Grund ihrer vorteilhaften Aktivität gegen Schadpilze und gegen physiologische Pflanzenkrankheiten besonders bevorzugt.

Die als Wirkstoffkomponenten der erfindungsgemässen Mittel beschriebenen Verbindungen der Formeln I, A, B, C, D und E sind individuell als Pflanzenfungizide beispielsweise aus folgenden Publikationen bekannt:

| Verbindung der Formel | Publikation |
|---|---|
| I | Deutsche Offenlegungsschrift Nrn. 2735872 |
| A | US-Patentschriften Nrn. 2553770; 2553771 und 2553776 |
| B | US-Patentschriften Nrn. 2974156 und 3379610 |
| C | US-Patentschriften Nrn. 3290353 und 3331735 |
| D | US-Patentschriften Nrn. 2553770; 2553771 und 2553776 |
| E | W.D. Thomas et al., PHYTOPATHOLOGY, 1962, *52*, 754 |

Kombinationspräparate bestehend aus Substanzen mit chemisch unterschiedlicher Struktur, die zur Erzeugung einer synergistischen Wirkungsverstärkung bei der Bekämpfung von pflanzenschädigenden Pilzen dienen, erlangen durch die damit verbundene Möglichkeit, der immer häufiger auftretenden Resistenzerscheinungen dieser Parasiten gegenüber Einzelwirksubstanzen, in zunehmendem Masse an Bedeutung. Einerseits kann nämlich die auf Grund der Resistenzausbreitung notwendig werdende Erhöhung der fungizid wirksamen Dosis gebremst, sogar vermieden oder verringert werden, was sowohl wirtschaftliche, als auch infolge einer Verminderung der Umweltbelastung bedeutsame ökologische Vorteile mit sich bringt; andererseits zeigen Kombinationspräparate u.a. weitere Vorteile gegenüber Einzelwirkstoff-Präparaten. So können Kombinationspräparate beispielsweise durch eine Verbreiterung des Wirkungsspektrums bzw. durch die sich ergänzende Wirkungsspektren der Einzelkomponenten besondere Applikationsvorteile bieten, die sich z.B. darin äussern, dass wichtige Schadpilzarten und vergesellschaftete Pflanzenkrankheiten, die gemeinsam aufzutreten pflegen, in einem einzigen Arbeitsgang und bei geringen Aufwandmengen wirkungsvoll eingedämmt und beseitigt werden können. Darüberhinaus offerieren Kombinationspräparate auch dann Vorteile gegenüber Einzelsubstanzpräparaten, wenn höhere Aufwandmengen, z.B. bei starkem Befall oder Befallsdruck unerlässlich sind. Durch eine verminderte Konzentration der Einzelkomponente in der gebrauchsfertigen Mischung und der daraus resultierenden Reduktion der unerwünschten Nebeneffekte, insbesondere phytotoxischer Art, wird dem Anwender ein auf die Praxis massgeschneidertes Kombinationspräparat zur Verfügung gestellt, das er auch unter den erschwerten Bedingungen eines erhöhten Befalldrucks problemlos und ohne zeitraubendes Ausprobieren, effektiv gegen parasitäre Pilzearten und parallel auftretende andere Pflanzenkrankheiten einsetzen kann, ohne dabei eine Beeinträchtigung der Entwicklung seiner Pflanzenkulturen befürchten zu müssen.

Ein im Obstanbau gefürchteter Schadpilz ist z.B. der Schorf (Venturia spp.), der in wichtigen Kernobstkulturen wie z.B. Apfel- und Birnenanlagen jährlich hohe Ernteausfälle verursacht und weltweit für diese Obstkulturen als einer der wichtigsten Schadfaktoren angesehen wird. Daher stellt eine weitere Verbesserung der Schorfbekämpfung ein wichtiges Forschungsziel dar.

Bisher versuchte man dieses Problem mit herkömmlichen residual wirkenden Kontaktfungiziden zu meistern. Es zeigte sich jedoch, dass insbesondere bei hohem Befallsdruck, wie beispielsweise in Zeiten häufiger Niederschläge oder bei feuchtwarmer Witterung, der Einsatz dieser konventionellen Kontaktfungizide zu keinem durchschlagenden Erfolg führt, zumal bei derartigen Wetterlagen, neben dem schwer zu bekämpfenden Schorf, weitere parasitäre und nichtparasitäre Pflanzenkrankheiten, wie echter Mehltau, Rost, Lagerkrankheiten, physiologische Pflanzenkrankheiten, wie Lentizellenröte, Jonathan-Fleckenkrankheit usw. die Obstkulturen gleichzeitig befallen, die Pflanzen zusätzlich schädigen und durch die herkömmlichen Schorfmittel nur ungenügend eingedämmt werden.

Es wurde nun überraschend gefunden, dass das an sich systemisch wirkende Fungizid der obengenannten Formel I, das einen hohen Wirkungsgrad gegen Schorf-, Mehltau- und Rostarten aufweist, aber nur eine geringe Aktivität gegenüber anderen Pflanzenkrankheiten entwickelt, durch eine Kombination mit den obigen, residual wirkenden Kontaktfungiziden der Formeln A, B, C, D oder E nicht nur eine unvorhersehbare Aktivitätssteigerung gegenüber Schorfpilzen erfährt, die die einfache Summe der Schorfwirkungen der Einzelkomponenten deutlich übertrifft (synergistischer Effekt), sondern darüberhinaus zu einer Verbreiterung des Wirkungsspektrums führt, wobei überraschenderweise bei der Reduktion der Dosierung in weiten Konzentrationsbereichen sowohl die volle Wirkungshöhe erhalten bleibt, als auch überraschenderweise weitere Pflanzenkrankheiten, insbesondere physiologischer Art zusätzlich bekämpft werden, was einer Qualitätsverbesserung des Erntegutes gleichkommt.

Durch den Einsatz der erfindungsgemässen Wirkstoffkombinationen wird dank der grossen Wirkungsbreite ein sicherer und vereinfachter Schutz wichtiger Pflanzenkulturen, wie z.B. der genannten Obstkulturen erzielt und durch die gesteigerte Wirkungshöhe und -breite die Qualität des Erntegutes deutlich verbessert.

Durch Verringerung der applizierten Wirkstoffmenge in der Kombination, in der Grössenordnung von 30-60% gegenüber der Applikation der Einzelsubstanzen, wird zudem eine drastische Verminderung der Umweltbelastung erreicht.

Die erfindungsgemässen Wirkstoffkombinationen zeigen ein für den praktischen Einsatz sehr günstiges, breites Fungizid-Spektrum, das die wichtigsten Schadpilze und weitere oft parallel auftretende andere Pflanzenkrankheiten, insbesondere physiologische Pflanzenkrankheiten wie Lentizellenröte oder Jonathan-Flecken einschliesst. Sie besitzen sehr vorteilhafte kurative, systemische und insbesondere präventive Eigenschaften und lassen sich zum Schutz von zahlreichen Kulturpflanzen einsetzen. Mit den erfindungsgemässen Wirkstoffkombinationen können an Pflanzen oder an Pflanzenteilen (Früchte, Blüten, Laubwerk, Stengel, Knollen, Wurzeln) von unterschiedlichen Nutzkulturen die auftretenden Fungi eingedämmt oder vernichtet werden, wobei auch später zuwachsende Pflanzenteile von derartigen Schadpilzen verschont bleiben.

Vorteilhafte Wirkungen werden gegenüber folgenden Klassen von phytopathogenen Pilzen beobachtet. Fungi imperfecti (z.B. Helminthosporium, Septoria, Cercospora und Alternaria); Basidiomyceten (z.B. die Gattungen Hemileia, Rhizocotonia, Puccinia); insbesondere wirken sie gegen die Klasse der Ascomyceten (z.B. Venturia, Podosphaera, Erysiphe, Monilinia, Uncinula), insbesondere Ventura Spezies. Überdies wird die systemische Wirkung der neuen Mittel erhöht. Sie können ferner als Beizmittel zur Behandlung von Saatgut (Früchte, Knollen, Körner) und Pflanzenstecklingen zum Schutz von Pilzinfektionen sowie gegen im Erdboden auftretende phytopathogene Pilze eingesetzt werden.

Die Erfindung betrifft somit pflanzenschützende Mischungen sowie deren Verwendung zur Bekämpfung phytopathogener Pilze, bzw, die präventive Verhütung eines Krankheits-Befalls an Pflanzen, insbesondere Kulturpflanzen, bevorzugt Obstkulturen.

Darüberhinaus schliesst die vorliegende Erfindung auch die Herstellung dieser agrochemischen Mittel ein, die gekennzeichnet ist durch das innige Vermischen der Aktivkomponenten mit einem oder mehreren hierin beschriebenen Träger-Substanzen bzw. Verdünnungsmittel. Eingeschlossen ist auch ein Verfahren zur Behandlung

von Pflanzen, das sich durch Applikation der neuen Mittel auszeichnet.

Als Zielkulturen gelten im Rahmen dieser Erfindung beispielsweise folgende Pflanzenarten: Getreide (Weizen, Gerste, Roggen, Hafer, Reis, Sorghum und Verwandte); Rüben (Zucker- und Futterrüben); Stein-, Beeren- und insbesondere Kernobst (Pflaumen, Pfirsiche, Mandeln, Kirschen, Erd-, Him-, Stachel-, Johannis-, Josta-, Brombeeren, vor allem Äpfel und Birnen); Hülsenfrüchte (Bohnen, Linsen, Erbsen, Soja); Ölkulturen (Raps, Senf, Mohn, Oliven, Sonnenblumen, Kokos, Rizinus, Kakao, Erdnüsse); Gurkengewächse (Kürbis, Gurken, Melonen); Fasergewächse (Baumwolle, Flachs, Hanf, Jute); Citrusfrüchte (Orangen, Zitronen, Pampelmusen, Mandarinen); Gemüsesorten (Spinat, Kopfsalat, Spargel, Kohlarten, Möhren, Zwiebeln, Tomaten, Kartoffeln, Paprika); Lorbeergewächse (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Compositen).

Die erfindungsgemässen Mittel werden üblicherweise in Form von applikationsfähigen Zusammensetzungen verwendet und können gleichzeitig oder nacheinander mit weiteren Wirkstoffen oder applikationsfördernden Substanzen auf die zu behandelnde Fläche oder Pflanze gegeben werden. Diese weiteren Wirkstoffe können sowohl Düngemittel, Spurenelement-Vermittler oder z.B. das Pflanzenwachstum beeinflussende Präparate sein. Es können aber auch selektive Herbizide, Insektizide, weitere Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen der erfindungsgemässen Mittel, das mindestens einen dieser Wirkstoffe enthält, ist das Aufbringen auf das Blattwerk (Blattapplikation). Anzahl der Applikationen und Aufwandmenge richten sich dabei nach dem Befallsdruck für den entsprechenden Erreger (Pilzart). Die Kombinationspräparate können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt, z.B. in Form von Granulat (Bodenapplikation). Die erfindungsgemässen Wirkstoffkombinationen können aber auch auf Samenkörner aufgebracht werden (Coating), indem man die Körner entweder mit einer flüssigen Zubereitung tränkt oder sie mit einer festen Zubereitung beschichtet. Darüberhinaus sind in besonderen Fällen weitere Applikationsarten möglich, so z.B. die gezielte Behandlung der Pflanzenstengel oder der Knospen.

Die kombinierten Wirkstoffe werden dabei vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt.

Für die in den erfindungsgemässen Wirkstoffkombinationen massgebenden Gewichtsverhältnisse der Verbindung der Formel I zu den Verbindungen der Formeln A, B, C, D und E gilt der Bereich 1:3 bis 1:100. Zur Entfaltung der synergistischen Wirkung ist das Kombinationsverhältnis 1:20 bis 1:50 als günstig anzusehen. Die Aufwandmengen der Kombinationen betragen 4 bis 100, vorzugsweise 25 bis 75 g Aktivsubstanz/100 Liter Spritzbrühe.

Die Formulierungen d.h. die die Wirkstoffe und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je

nach Art der zu formulierenden Wirkstoffkombination nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Öl- oder Stearinsäure, oder von natürlichen Fettsäuregemischen, die z.B. aus Kokosnuss- oder Talgöl gewonnen werden können. Ferner sind auch die Fettsäure-methyllaurinsalze zu erwähnen.

Häufiger werden jedoch sog. synthetische Tenside verwendet, insbesondere Fettsulfonate, Fettsulfate, sulfonierte Benzimidazolderivate oder Alkylsulfonate.

Die Fettsulfonate oder -sulfate liegen in der Regel als Alkali-, Erdalkali- oder gegebenenfalls substituierte Ammoniumsalze vor und weisen einen Alkalirest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxyd-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxyd-Adduktes in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 g Propylenglykolethergruppen enthaltenden Polyethylenoxidaddukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxydaddukte, Tributylphenoxypolyethylenethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Die in der Formulierungstechnik gebräuchlichen Tenside sind u.a. in folgenden Publikationen beschrieben:

«Mc Cutcheon's Detergents and Emulsifiers Annual» BC Publishing Corp., Ridgewood New Jersey, 1980

Sisely and Wood, «Encyclopedia of Surgace Active Agents», Chemical Publishing Co., Inc. New York, 1980.

Die agrochemischen Zubereitungen enthalten in der Regel 0,1 bis 99%, insbesondere 0,1 bis 95% der Wirkstoffkombination, 99,9 bis 1%, insbesondere 99,8 bis 5% fester oder flüssiger Zusatzstoffe darunter 0 bis 25%, insbesondere 0,1 bis 25% an Tensiden.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Derartige agrochemische Mittel sind ein Bestandteil der vorliegenden Erfindung.

Zur Illustration seien nachfolgend einige Formulierungen erläutert, ohne die Erfindung jedoch einzuschränken.

*Formulierungsbeispiele für flüssige Wirkstoffe der Formel I (%=Gewichtsprozent)*

| *1. Emulsions-Konzentrate* | a) | b) | c) |
|---|---|---|---|
| Wirkstoffkombination aus I und A, B, C, D oder E | 25% | 40% | 50% |
| Ca-Dodecylbenzolsulfonat | 5% | 8% | 6% |
| Ricinusöl-polyethyleneglykolether (36 Mol Ethylenoxid) | 5% | — | — |
| Tributylphenoyl-polyethylenglykolether (30 Mol Ethylenoxid) | — | 12% | 4% |
| Cyclohexanon | — | 15% | 20% |
| Xylolgemisch | 65% | 25% | 20% |

Aus solchen Konzentraten können durch Verdünnen mit Wasser Emulsionen jeder gewünschten Kombination hergestellt werden.

*2. Lösungen*

| | a) | b) | c) | d) |
|---|---|---|---|---|
| Wirkstoffkombination aus I und A, B, C, D oder E | 80% | 10% | 5% | 95% |
| Ethylenglykol-monoethylether | 20% | — | — | — |
| Polyethylenglykol MG 400 | — | 70% | — | — |
| N-Methyl-2-pyrrolidion | — | 20% | — | — |
| Epoxydiertes Kokosnussöl | — | — | 1% | 5% |
| Benzin (Siedegrenzen 160-190° C) | — | — | 94% | — |

(MG=Molekulargewicht)

Die Lösungen sind zur Anwendung in Form kleiner Tropfen geeignet.

*3. Granulate*

| | a) | b) |
|---|---|---|
| Wirkstoffkombination aus I und A, B, C, D oder E | 5% | 10% |
| Kaolin | 94% | — |
| Hochdisperse Kieselsäure | 1% | — |
| Attapulgit | — | 90% |

Die Wirkstoffe werden in Methylenchlorid gelöst, auf den Träger aufgesprüht und das Lösungsmittel anschliessend im Vakuum abgedampft.

*4. Stäubemittel*

| | a) | b) |
|---|---|---|
| Wirkstoffkombination aus I und A, B, C, D oder E | 2% | 5% |
| Hochdisperse Kieselsäure | 1% | 5% |
| Talkum | 97% | — |
| Kaolin | — | 90% |

Durch inniges Vermischen auf Trägerstoffe mit dem Wirkstoff erhält man gebrauchsfertige Stäubemittel.

*Formulierungsbeispiele für feste Wirkstoffe der Formel I (%=Gewichtsprozent)*

*5. Spritzpulver*

| | a) | b) | c) |
|---|---|---|---|
| Wirkstoffkombination aus I und A, B, C, D oder E | 25% | 50% | 75% |
| Na-Ligninsulfonat | 5% | 5% | — |
| Na-Laurylsulfat | 3% | — | 5% |
| Na-Diisobutylnaphthalinsulfonat | — | 6% | 10% |
| Octylphenolpolyethylenglykolether (7-8 Mol Ethylenoxid) | — | 2% | — |
| Hochdisperse Kieselsäure | 5% | 10% | 10% |
| Kaolin | 62% | 27% | — |

Die Wirkstoffe werden mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

*6. Emulsions-Konzentrat*

| | |
|---|---|
| Wirkstoffkombination aus I und A, B, C, D oder E | 10% |
| Octylphenolpolyethylenglykolether (4-5 Mol Ethylenoxid) | 3% |
| Ca-Dodecylbenzolsulfonat | 3% |
| Ricinusölpolyglykolether (35 Mol Ethylenoxid) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

*7. Stäubemittel*

| | a) | b) |
|---|---|---|
| Wirkstoffkombination aus I und A, B, C, D oder E | 5% | 8% |
| Talkum | 95% | — |
| Kaolin | — | 92% |

Man erhält anwendungsfertige Stäubemittel, indem die Wirkstoffe mit den Trägern vermischt auf einer geeigneten Mühle vermahlen wird.

*8. Extruder-Granulat*

| | |
|---|---|
| Wirkstoffkombination aus I und A, B, C, D oder E | 10% |
| Na-Ligninsulfonat | 2% |
| Carboxymethylcellulose | 1% |
| Kaolin | 87% |

Die Wirkstoffe werden mit den Zusatzstoffen vermischt, vermahlen und mit Wasser angefeuchtet. Dieses Gemisch wird extrudiert und anschliessend im Luftstrom getrocknet.

*9. Umhüllungs-Granulat*

| | |
|---|---|
| Wirkstoffkombination aus I und A, B, C, D oder E | 3% |
| Polyethylenglykol (MG 200) | 3% |
| Kaolin | 94% |

(MG=Molekulargewicht)

Die fein gemahlenen Wirkstoffe werden in einem Mischer auf das mit Polyethylenglykol angefeuchtete Kaolin gleichmässig aufgetragen. Auf diese Weise erhält man staubfreie Umhüllungs-Granulate.

*10. Suspensions-Konzentrat*

| | |
|---|---|
| Wirkstoffkombination aus I und A, B, C, D oder E | 40% |
| Ethylenglykol | 10% |
| Nonylphenolpolyethylenglykolether (15 Mol Ethylenoxid) | 6% |
| N-Ligninsulfonat | 10% |
| Carboxymethylcellulose | 1% |
| 37%ige wässerige Formaldehyd-Lösung | 0,2% |
| Silikonöl in Form einer 75%igen wässerigen Emulsion | 0,8% |
| Wasser | 32% |

Die fein gemahlenen Wirkstoffe werden mit den Zusatzstoffen innig vermischt. Man erhält so ein Suspensions-Konzentrat, aus welchem durch Verdünnen mit Wasser Suspensionen jeder gewünschten Konzentration hergestellt werden können.

*Biologische Beispiele*

Die synergistische Wirksamkeit der den erfindungsgemässen Mitteln zugrundeliegenden Wirkstoffkombinationen wird anhand der in den nachfolgend beschriebenen biologischen Untersuchungen geprüften Wirkstoffkombinationen beispielhaft bewiesen.

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel [ursprünglich nur zur Berechnung des Erwartungswertes E von Herbizidmischungen verwendet] und kann wie folgt berechnet werden, vgl.:

1) COLBY, LR. «Calculating synergistic and antagonistic responses of herbicide combination». Weeds 15, S. 20-22. 2) LIMPEL and al., 1062 «Weeds control by ... certain combinations». Proc. NEWCL, vol. 16, S. 48-53:

(g AS/hl=Gramm Aktivsubstanz je Hektoliter Spritzbrühe)

X = % Wirkung durch Fungizid $\alpha$ bei p g AS/hl
Y = % Wirkung durch Fungizid $\beta$ bei q g AS/hl
E = die erwartete Wirkung der Fungizide $\alpha + \beta$ bei p+q g AS/hl Aufwandmenge

dann ist nach Colby: $E=Y+Y-\frac{X \cdot Y}{100}$

Wenn die tatsächlich beobachtete Wirkung (O) grösser ist als die berechnete, so ist die Kombination in ihrer Wirkung überadditiv, d.h. es liegt ein synergistischer Effekt vor.

In den nachfolgenden Beispielen wurde E gemäss obiger Gleichung berechnet.

*Beispiel 18:*

*Wirkung gegen Venturia inaequalis auf Apfel*

10 Apfelsämlinge der Sorte Mc Intosh wurden in 5 cm Plastiktöpfen angezogen und im 7 bis 9-Blattstadium mit 5 ml einer aus Spritzpulver eines der Wirkstoffe bzw. der Wirkstoffkombination hergestellten Spritzbrühe (vgl. Tabelle 1) bis kurz vor dem Abtropfen besprüht. Nach 24 h wurden die behandelten Pflanzen mit einer Konidiensuspension (300 000 Konidiensporen/ml) von Venturia inaequalis bei 22°C infiziert. Die Testpflanzen wurden dann 20 weitere Tage bei 20-22°C im Gewächshaus aufgestellt. Die Versuchsauswertung erfolgte am 15. und 20. Tag nach Inoculation, wobei die vom Pilz befallene Blattfläche der beiden jüngsten inoculierten Blätter in % zu ihrer totalen Blattfläche gemessen wurde.

Der Wirkungsgrad wurde in den nachfolgenden Tests nach Abott in % berechnet:

$$\frac{Ca-Ta}{Ca} \times 100 = \%\ \text{Wirkung}$$

Ca=Befall der behandelten Kontrolle
Ta=Befall im behandelten Verfahren.

*Resultate zu Beispiel 18:*

Kultur: Apfel
Sorte: Mc Intosh
Krankheit: Apfelschorf (Venturia inaequalis)

| Dosierung g AS/100 Liter | | % Wirkung gegen Apfel-Blattschorf | |
|---|---|---|---|
| Verbindung der Formel I | CAPTAN= Verbindung der Formel A | O (beobachtet) | E (erwartet, additiv) |
| 2,5 | — | 71 | |
| 2 | — | 55 | |
| 1,5 | — | 42 | |
| 1 | — | 19 | |
| — | 50 | 91 | |
| — | 25 | 83 | |
| — | 12 | 51 | |
| — | 6 | 38 | |
| 2,5 | 50 | 98 | 97 |
| 2 | 25 | 98* | 92 |
| 2 | 12 | 86* | 78 |
| 1 | 25 | 99* | 86 |
| 1 | 12 | 82* | 60 |
| 0 | 0 | 100% Befall | 100% Befall |
| * Synergistischer Effekt wird gezeigt | | | |

*Beispiel 19:*

*Wirkung gegen Blatt- und Fruchtschorf auf Apfel*

(Freilandversuch im Kanton Wallis, Schweiz).
Kultur: Apfelbäume, Sorte Golden Delicious.

Versuchsanlage: 3 Bäume, 11jährig, pro Parzelle, 3 Wiederholungen.

Applikationsdaten: Ab 13.5.-8.9. in 7-12tägigen Intervallen, 12 Spritzungen.

Schorfinfektionsperioden (natürlicher Befall): kontinuierlicher Befallsdruck von Mai bis Oktober.

Versuchsauswertung:

9.6. % Blätter mit Schorfbefall (100 Blätter pro Baum).

23.10. % Früchte mit Schorfbefall (> 100 Früchte pro Baum bonitiert).

*Resultate:*

| Dosierung g AS/100 Liter | | % Wirkung gegen Blattschorf | | % Wirkung gegen Fruchtschorf | |
|---|---|---|---|---|---|
| Substanz der Formel I | CAPTAN= Substanz A | O | E | O | E |
| 2,5 | 0 | 71 | | 68 | |
| 0 | 47,5 | 77 | | 35 | |
| 2,5 | 47,5 | 98* | 93 | 98* | 79 |
| 0 | 0 | (100% Befall) | | (100% Befall) | |
| * Synergistische Wirkung | | | | | |

*Beispiel 20:*

*Wirkung gegen Blatt- und Fruchtschorf auf Apfel*

(Freilandversuch im Kanton Wallis, Schweiz).

Apfelbäume, Sorte Idared.

Versuchsanlage: 3 Bäume, 11jährig, pro Parzelle, 3 Wiederholungen.

Applikationsdaten: Ab 7.4.-16.9. in 7-12tägigem Intervallen, 16 Spritzungen.

Schorfinfektionsperioden (natürlicher Befall): kontinuierlicher Befallsdruck von Mai bis Oktober.

Versuchsauswertung:

7.8. % Blätter mit Schorfbefall (100 Blätter pro Baum)

14.10. % Früchte mit Schorfbefall (100 Früchte pro Baum)

*Resultate:*

| Dosierung g AS/100 Liter | | % Wirkung gegen Blattschorf | | % Wirkung gegen Fruchtschorf | |
|---|---|---|---|---|---|
| Substanz der Formel I | CAPTAN= Substanz A | O | E | O | E |
| 2,5 | 0 | 38 | | 30 | |
| 0 | 47,5 | 35 | | 60 | |
| 2,5 | 47,5 | 73* | 60 | 90* | 72 |
| Substanz der Formel I | MANCOZEB= Substanz B | | | | |
| 2,5 | 0 | 38 | | 30 | |
| 0 | 72,5 | 29 | | 52 | |
| 2,5 | 72,5 | 80* | 56 | 94* | 66 |
| Substanz der Formel I | FOLPET= Substanz D | | | | |
| 2,5 | 0 | 38 | | 30 | |
| 0 | 47,5 | 27 | | 78 | |
| 2,5 | 47,5 | 81* | 55 | 94* | 84 |
| 0 | 0 | (100% Befall) | | (100% Befall) | |
| * Synergistische Wirkung | | | | | |

*Zusätzliche Nebenwirkungen der Kombination:*

*Reduzierung der natürlichen Fruchtberostung*

Die Testsubstanz der Formel I kann die natürliche Fruchtberostung bei der Sorte Golden Delicious nicht im notwendigen Umfang vermindern. In der Kombination der Verbindung I mit einer der Substanzen A bis D wird die Fruchtberostung drastisch reduziert und die Fruchtqualität unerwartet gesteigert. Die geernteten Früchte zeigen ein makelloses Aussehen und einen einwandfreien Geschmack.

*Beispiel 21:*

*Wirkung gegen Berostung bei Apfel*

(Freilandversuch im Kanton Aargau, Schweiz).

Apfelbäume, Sorte Golden Delicious.

Versuchsanlage: 1 Baum/Parzelle, 3jährig, 12 Wiederholungen.

Applikationsdaten: 7.4.-2.9. in 10-18tägigen Intervallen, 13 Spritzungen.

*Resultate:*

| Dosierung g AS/100 Liter | | % Früchte pro Berostungsklasse[1] 0 | 1 | 2 |
|---|---|---|---|---|
| Substanz der Formel I | CAPTAN= Substanz A | | | |
| 2,5 | 0 | 17 | 39 | 44 |
| 0 | 47,5 | 36 | 35 | 29 |
| 2,5 | 47,5 | 43 | 38 | 19 |
| 0 | 0 | 5 | 41 | 54 |

[1] Berostungsklasse 0=keine Berostung
1=1-10% der Fruchtoberfläche berostet
2=>10% der Fruchtoberfläche berostet

*Beispiel 22:*

*Physiologische Lentizellenröte*

(Freilandversuch im Kanton Zürich, Schweiz).

Einige wenige Produkte wie z.B. CAPTAN = Substanz A und FOLPET = Substanz D zeigen in den empfohlenen Aufwandmengen eine Wirkung gegen obige physiologische Krankheit beim Apfel. Bei Nichtbehandlung treten Ausfälle von 20-40% der Früchte bei der Sorte Golden Delicious häufig auf. Die Substanz der Formel I vermag diese Krankheit nicht voll zu kontrollieren. Die erfindungsgemässen Kombinationen zeigen eine unerwartet hohe Aktivität.

Aus wirtschaftlichen Gründen ist es wichtig, dass die zur Schorfbekämpfung eingesetzten Verbindungen auch die Lentizellenröte mitkontrollieren.

Apfelbäume, Sorte Golden Delicious.

Versuchsanlage: 1 Baum/Parzelle, 15jährig, 4 Wiederholungen.

Applikationen: 14.4.-22.9. in 10-16tägigen Spritzintervallen. 13 Spritzungen.

*Resultate:*

| Dosierung g AS/hl | | % Früchte befallen mit Lentizellenröte |
|---|---|---|
| Substanz der Formel I | CAPTAN= Substanz A | |
| 5,0 | 0 | 13 |
| 2,5 | 47,5 | 0,8 |
| 0 | 120,0 | 1,2 |
| 0 | 0 | 35 |

*Beispiel 23:*

*Wirkung gegen Jonathan-Flecken Krankheit*

(Freilandversuch im Kanton Zürich, Schweiz).

Diese, ebenfalls nicht parasitäre, physiologische Krankheit (auch Jonathanspot genannt) befällt vor allem rotfrüchtige Sorten der Jonathangruppe (z.B. Jonathan, Idared, Jonared) und kann beträchtliche Ausfälle während der Lagerung verursachen.

Die Kombination der Substanzen I und A bewirkt eine starke Reduktion der Krankheit obwohl Verbindung I selbst nur schwach wirksam ist.

Apfelbäume, Sorte Jonathan.

Versuchsanlage: 1 Baum/Parzelle, 15jährig, 6 Wiederholungen.

Applikationen: 14.4.-15.9. in 10-16tägigen Spritzintervallen. 12 Spritzungen.

*Resultate:*

| Dosierung g AS/100 Liter | | % Früchte befallen mit Jonathanflecken |
|---|---|---|
| Substanz der Formel I | CAPTAN= Substanz A | |
| 2,5 | 0 | 21 |
| 2,5 | 47,5 | 12 |
| 0 | 120,0 | 11 |
| 0 | 0 | 25 |

Die Resultate der biologischen Untersuchungen (Beispiele 18 bis 23) demonstrieren beispielhaft die eindeutig überlegene Wirkung der Kombinationspräparate im Vergleich zur Wirkung der Einzelsubstanz-Präparate.

**Patentansprüche**

1. Mittel zur Bekämpfung von Pflanzenkrankheiten, dadurch gekennzeichnet, dass es als aktive Komponente eine Wirkstoffkombination bestehend aus der Verbindung der Formel I

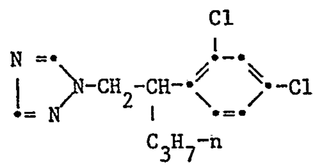

(I)

und einer der Verbindungen der Formel A bis E

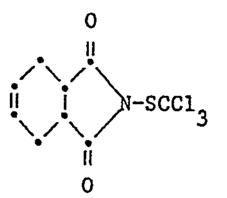

(A),

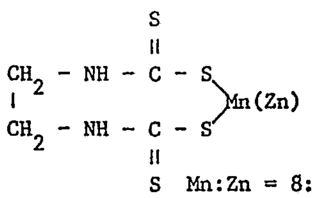

Mn:Zn = 8:1

(B),

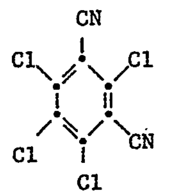

(C),

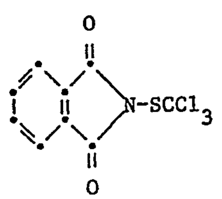

(D)

oder

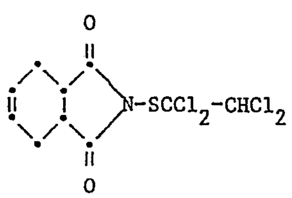

(E)

zusammen mit geeigneten Trägerstoffen und/oder Verteilungs- und Verdünnungsmitteln enthält.

2. Mittel nach Anspruch 1, dadurch gekennzeichnet, dass es als aktive Komponente eine Wirkstoffkombination bestehend aus der Verbindung der Formel I und der Verbindung der Formel A enthält.

3. Mittel nach Anspruch 1, dadurch gekennzeichnet, dass es als aktive Komponente eine Wirkstoffkombination bestehend aus der Verbindung der Formel I und der Verbindung der Formel B enthält.

4. Mittel nach Anspruch 1, dadurch gekennzeichnet, dass es als aktive Komponente eine Wirkstoffkombination bestehend aus der Verbindung der Formel I und der Verbindung der Formel C enthält.

5. Mittel nach Anspruch 1, dadurch gekennzeichnet, dass es als aktive Komponente eine Wirkstoffkombination bestehend aus der Verbindung der Formel I und der Verbindung der Formel D enthält.

6. Mittel nach Anspruch 1, dadurch gekennzeichnet, dass es als aktive Komponente eine Wirkstoffkombination bestehend aus der Verbindung der Formel I und der Verbindung der Formel E enthält.

7. Mittel nach einem der Ansprüche 1 bis 6, dadurch gekennzeichnet, dass in der Wirkstoffkombination das Gewichtsverhältnis der Verbindung I zu der oder den Verbindungen A, B, C, D oder E 1:3 bis 1:100 beträgt.

8. Mittel nach Anspruch 7, dadurch gekennzeichnet, dass das Gewichtsverhältnis 1:20 bis 1:50 beträgt.

9. Mittel nach einem der Ansprüche 1 bis 6, dadurch gekennzeichnet, dass es 0,1 bis 99 Gewichtsprozent der Wirkstoffkombination und 99,9 bis 1 Gewichtsprozent an festen oder flüssigen Zusatzstoffen enthält.

10. Mittel nach Anspruch 9, dadurch gekennzeichnet, dass es 0,1 bis 95 Gewichtsprozent der Wirkstoffkombination und 99,9 bis 5% an festen oder flüssigen Zuschlagstoffen enthält.

11. Verfahren zur Herstellung eines in den Ansprüchen 1 bis 10 definierten Pflanzenschutzmittels, dadurch gekennzeichnet, dass man die Wirkstoffe der Formel I sowie der Formeln A, B, C, D oder E mit landwirtschaftlich geeigneten festen und flüssigen Zusatzstoffen und Tensiden bis zur Herstellung der Homogenität innig vermischt.

12. Verfahren zur Bekämpfung oder Verhütung eines Krankheitsbefalls an Kulturpflanzen, dadurch gekennzeichnet, dass man eine der in den Ansprüchen 1 bis 6 definierten Wirkstoffkombinationen auf die Pflanze oder deren Standort appliziert.

13. Verfahren nach Anspruch 12, dadurch gekennzeichnet, dass man eine Spritzbrühe einsetzt, die als Aktivkomponente 4 bis 100 Gramm der Wirkstoffkombination pro 100 Liter Spritzbrühe enthält.

14. Verfahren nach Anspruch 13, dadurch gekennzeichnet, dass man eine Spritzbrühe einsetzt, die als Aktivkomponente 25 bis 75 g der Wirkstoffkombination pro 100 Liter Spritzbrühe enthält.

15. Verfahren nach einem der Ansprüche 12 bis 14, dadurch gekennzeichnet, dass man Obstkulturen während des Schorfbefalls behandelt.

16. Verwendung eines der in den Ansprüchen 1 bis 10 beschriebenen Mittel zur Bekämpfung und/oder präventiven Befalls von Kulturpflanzen vor phytopathogenen Pilzen und vor physiologischen Pflanzenkrankheiten.

17. Verwendung eines Mittels nach Anspruch 16, dadurch gekennzeichnet, dass es sich bei den Kulturpflanzen um Obstkulturen handelt.

18. Verwendung eines Mittels nach Anspruch 17 in Kernobstkulturen.

19. Verwendung eines Mittels nach Anspruch 18 in Apfel- oder Birnenkulturen.

20. Verwendung eines Mittels nach einem der Ansprüche 16 bis 19, dadurch gekennzeichnet, dass es sich bei den phytopathogenen Pilzen um Venturia Spezies handelt.

## Claims

1. A composition for controlling plant diseases, which composition contains as active component a combination comprising the compound of the formula I

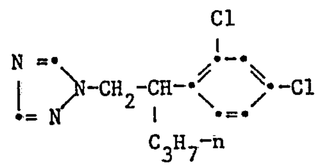
(I)

and one of the compounds of the formulae A to E

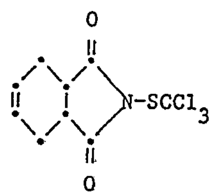
(A),

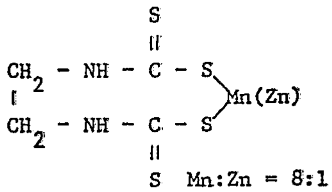
Mn:Zn = 8:1
(B),

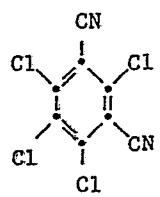
(C),

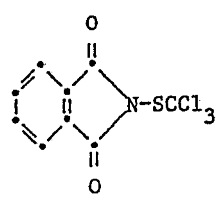
(D)

or

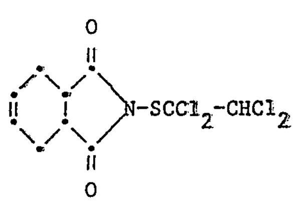
(E)

together with suitable carriers and/or adjuvants and diluents.

2. A composition according to claim 1, which contains as active component a combination of the compound of formula I and the compound of formula A.

3. A composition according to claim 1, which contains as active component a combination of the compound of formula I and the compound of formula B.

4. A composition according to claim 1, which contains as active component a combination of the compound of formula I and the compound of formula C.

5. A composition according to claim 1, which contains as active component a combination of the compound of formula I and the compound of formula D.

6. A composition according to claim 1, which contains as active component a combination of the compound of formula I and the compound of formula E.

7. A composition according to any one of claims 1 to 6, wherein the weight ratio of the compound of formula I to the compound of formula A, B, C, D or E is 1:3 to 1:100.

8. A composition according to claim 7, wherein the weight ratio is 1:20 to 1:50.

9. A composition according to any one of claims 1 to 6, which contains 0.1 to 99% by weight of the combination and 99.9 to 1% by weight of solid or liquid adjuvants.

10. A composition according to claim 9, which contains 0.1 to 95% by weight of the combination and 99.9% to 5% of solid or liquid adjuvants.

11. A process for the preparation of a plant protection composition as defined in any one of claims 1 to 10, which comprises intimately mixing the compound of formula I and the compound of formula A, B, C, D or E with agriculturally suitable solid or liquid adjuvants and a surfactant until the mixture is homogeneous.

12. A method of controlling plant diseases in cultivated plants or of treating said plants to protect them from attack by such diseases, which comprises applying to the plants or to the locus thereof an effective amount of a combination as claimed in any one of claims 1 to 6.

13. A method according to claim 12, which comprises applying a spray mixture which contains 4 to 100 g of the combination per 100 l of said spray mixture.

14. A method according to claim 13, which comprises applying a spray mixture which contains 25 to 75 g of the combination per 100 l of said spray mixture.

15. A method according to any one of claims 12 to 14, which comprises treating fruit crops during scab infestation.

16. Use of a composition as defined in any one of claims 1 to 10 for controlling phytopathogenic fungi and physiological plant diseases in cultivated plants or for treating said plants to protect them from attack by such fungi and diseases.

17. Use of a composition according to claim 16, wherein the cultivated plants are fruit crops.

18. Use of a composition according to claim 17, wherein the fruit crops are crops of pomes.

19. Use of a composition according to claim 18, wherein the crops of pomes are crops of apples or pears.

20. Use of a composition according to any one of claims 16 to 19, wherein the phytopathogenic fungi are Venturia species.

## Revendications

1. Produit pour combattre les maladies des végétaux, caractérisé en ce qu'il contient en tant que composant actif une combinaison de substances actives consistant en le composé de formule I

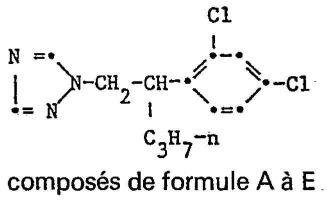

(I)

et l'un des composés de formule A à E

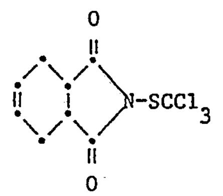

(A),

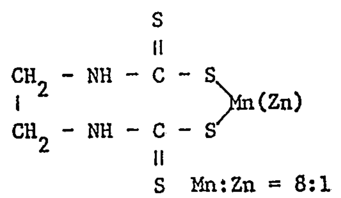

Mn:Zn = 8:1

(B),

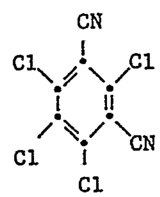

(C),

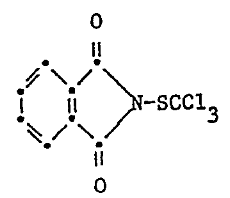

(D)

ou

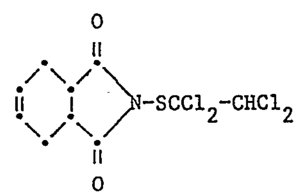

(E)

avec des véhicules et/ou dispersants et diluants appropriés.

2. Produit selon la revendication 1, caractérisé en ce qu'il contient en tant que composant actif une combinaison de substances actives consistant en le composé de formule I et le composé de formule A.

3. Produit selon la revendication 1, caractérisé en ce qu'il contient en tant que composant actif une combinaison de substances actives consistant en le composé de formule I et le composé de formule B.

4. Produit selon la revendication 1, caractérisé en ce qu'il contient en tant que composant actif une combinaison de substances actives consistant en le composé de formule I et le composé de formule C.

5. Produit selon la revendication 1, caractérisé en ce qu'il contient en tant que composant actif une combinaison de substances actives consistant en le composé de formule I et le composé de formule D.

6. Produit selon la revendication 1, caractérisé en ce qu'il contient en tant que composant actif une combinaison de substances actives consistant en le composé de formule I et le composé de formule E.

7. Produit selon l'une des revendications 1 à 6, caractérisé en ce que, dans la combinaison de substances actives, les proportions relatives en poids entre le composé I et le ou les composés A, B, C, D ou E vont de 1:3 à 1:100.

8. Produit selon la revendication 7, caractérisé en ce que les proportions relatives en poids sont de 1:20 à 1:50.

9. Produit selon l'une des revendications 1 à 6, caractérisé en ce qu'il contient de 0,1 à 99% en poids de la combinaison de substances actives et de 99,9 à 1% en poids d'additifs solides ou liquides.

10. Produit selon la revendication 9, caractérisé en ce qu'il contient de 0,1 à 95% en poids de la combinaison de substances actives et de 99,9 à 5% d'additifs solides ou liquides.

11. Procédé pour la préparation d'un produit phytosanitaire défini dans les revendications 1 à 10, caractérisé en ce qu'on mélange intimement, jusqu'à homogénéité, les substances actives de formule I et de formules A, B, C, D ou E avec des additifs et agents tensio-actifs solides et liquides appropriés à l'usage agricole.

12. Procédé pour combattre ou prévenir une maladie de végétaux cultivés, caractérisé en ce que l'on applique sur la plante ou son habitat l'une des combinaisons de substances actives définies dans les revendications 1 à 6.

13. Procédé selon la revendication 12, caractérisé en ce que l'on utilise une bouillie de pulvérisation contenant en tant que composant actif de 4 à 100 g de la combinaison de substances actives pour 100 l de la bouillie de pulvérisation.

14. Procédé selon la revendication 13, caractérisé en ce que l'on utilise une bouillie de pulvérisation contenant en tant que composant actif 25 à 75 g de la combinaison de substances actives pour 100 l de la bouillie de pulvérisation.

15. Procédé selon l'une des revendications 12 à 14, caractérisé en ce que l'on traite des cultures fruitières atteintes d'escarres.

16. Utilisation d'un produit décrit dans les revendications 1 à 10 pour traiter et/ou prévenir une attaque de végétaux cultivés par des mycètes phytopathogènes ou des maladies physiologiques de végétaux.

17. Utilisation d'un produit selon la revendication 16, caractérisée en ce que les végétaux cultivés sont des cultures fruitières.

18. Utilisation d'un produit selon la revendication 17 dans des cultures de fruits à pépins ou noyaux.

19. Utilisation d'un produit selon la revendication 18 dans des cultures de pommiers ou de poiriers.

20. Utilisation d'un produit selon l'une des revendications 16 à 19, caractérisée en ce que les mycètes phytopathogènes appartiennent à l'espèce Venturia.